**Europäisches Patentamt**

**European Patent Office**

**Office européen des brevets**

(11) Numéro de publication : **0 506 544 A1**

(19)

# (12) DEMANDE DE BREVET EUROPEEN

(21) Numéro de dépôt : **92400791.7**

(22) Date de dépôt : **24.03.92**

(51) Int. Cl.⁵ : **H04N 7/14, H04N 5/232**

(30) Priorité : **26.03.91 FR 9103638**

(43) Date de publication de la demande :
**30.09.92 Bulletin 92/40**

(84) Etats contractants désignés :
**DE GB**

(71) Demandeur : **FRANCE TELECOM
Etablissement autonome de droit public, 6,
Place d'Alleray
F-75015 Paris (FR)**

(72) Inventeur : **Guichard, Jacques
8 rue des Morillons
F-75015 Paris (FR)**
Inventeur : **Buchner, Georges
34 rue de Picpus
F-75012 Paris (FR)**

(74) Mandataire : **Mongrédien, André et al
c/o BREVATOME 25, rue de Ponthieu
F-75008 Paris (FR)**

(54) **Système de télécommunication visuelle et sonore comportant un terminal, une caméra et un combiné.**

(57)    L'invention concerne un système de télécommunication visuelle et sonore comportant un
terminal audiovisuel (100), une caméra et un
combiné avec écouteur et microphone.

Elle consiste à équiper le combiné (200) d'une
télécommande agissant sur le terminal et sur la
caméra par l'intermédiaire du terminal.

Application aux terminaux de télécommunication tels que les visiophones, les équipements de visioconférence-visioréunion.

FIG. 1

EP 0 506 544 A1

L'invention concerne un système de télécommunication visuelle et sonore comportant un terminal, une caméra, un écran et un combiné téléphonique avec microphone et écouteur.

L'invention s'applique aux visiophones, mais aussi à tout système tel que les équipements de visioconférence ou visioréunion ou audioconférence.

Lors d'une communication en visiophonie, il est important que le sujet reste relativement immobile par rapport à la caméra du visiophone, ceci afin que son interlocuteur distant dispose d'une image de qualité convenable, et en particulier qui puisse être regardée sans fatigue et sans gêne dans des conditions optimales. Ceci est d'autant plus vrai que l'image émise est codée afin de réduire le débit et l'adapter à celui de l'accès d'un réseau numérique. L'image en ce cas doit évoluer lentement.

Cependant, il arrive qu'au cours d'une communication en visiophonie, un interlocuteur ait à effectuer des commandes en agissant par exemple sur des parties mobiles ou sur des touches du visiophone.

Par exemple, dans le cas d'un visiophone équipé d'un système de cadrage piloté par le terminal, il peut avoir à taper sur le clavier du terminal pour commander l'orientation de la caméra et modifier ainsi son propre cadrage, ou bien il peut souhaiter modifier les réglages, en luminosité ou en contraste, de l'écran de visualisation ou de son visiophone, ou agir sur la position de l'écran (cas des cristaux liquides qui ont un cône d'observation réduit) etc., ou encore il peut souhaiter mettre l'installation en position dite "mains libres" par enfoncement d'une touche appropriée du terminal.

Ces interventions de l'utilisateur sont indésirables en ce qu'elles nuisent au confort visuel de l'interlocuteur situé à l'autre bout.

En particulier, l'utilisateur peut avoir à se rapprocher du terminal à tel point que, son visage étant trop proche de la caméra, l'image de celui-ci est dégradée. Une autre éventualité consiste à ce que l'utilisateur effectuant la manipulation fasse passer sa main dans le champ de la caméra, à grande proximité de celle-ci. Il en résulte alors que l'image dont dispose l'interlocuteur distant est temporairement masquée en tout ou partie, ce qui est bien entendu indésirable.

Enfin, il est possible que l'utilisateur sorte du champ de la caméra pour effectuer les manipulations.

La présente invention permet de remédier à ces problèmes.

La présente invention a pour objet un système de télécommunication visuelle et sonore, comportant un terminal, une caméra, un écran de visualisation et un combiné téléphonique comprenant un écouteur et un microphone, caractérisé en ce que le combiné comprend en outre des moyens de télécommande du terminal et de la caméra à partir du terminal, qui comportent des moyens d'action permettant à l'utilisateur du combiné d'obtenir des déplacements en x,y à distance d'un curseur sur l'écran du terminal et de "cliquer" sur une zone, et qui émettent des signaux codés de télécommande, le terminal comprenant des moyens de réception et de décodage de ces signaux.

Selon un mode de réalisation les moyens de télécommande comportent des moyens de génération de signaux électriques sous la forme de salves modulées.

On prévoit alors de transmettre ces signaux de télécommande au moyen du cordon qui relie le combiné au terminal.

Le cordon comporte selon une première variante de réalisation un fil supplémentaire pour transmettre les signaux de télécommande.

Selon une deuxième variante de réalisation le cordon comporte un fil pour l'alimentation des amplificateurs des transducteurs électroacoustiques (microphone et écouteur) que l'on utilise en outre pour transmettre les signaux de télécommande.

Selon un deuxième mode de réalisation les moyens de télécommande comportent des moyens de génération de signaux infrarouges modulés.

Le combiné comprend un ou préférentiellement plusieurs émetteurs infrarouges, ce qui permet à l'utilisateur de garder le combiné près de l'oreille tout en pouvant utiliser les télécommandes.

Selon un troisième mode de réalisation les moyens de télécommande comportent des moyens de génération de signaux ultrasons modulés.

Le combiné comprend alors un émetteur d'ultrasons.

Conformément à un aspect de l'invention, le combiné comporte des moyens d'action qui peuvent être constitués de touches d'un clavier.

Les moyens d'action peuvent être constitués d'une boule ou d'un "joystick" ou d'un "balltrack".

Selon une variante de réalisation le clavier du combiné comporte des touches pour la numérotation.

Selon un aspect de l'invention, dans le cas où le clavier ne comporte pas de touches de numérotation, la numérotation est réalisée par les touches de la télécommande qui désignent les touches d'un clavier apparaissant sur l'écran

Selon un mode de réalisation le combiné comporte une matrice clavier reliée à un encodeur, lequel est relié à un sérialisateur qui pilote soit un modulateur de signal, soit le ou les émetteurs infrarouges, soit l'émetteur d'ultrasons.

La présente invention sera mieux comprise à l'aide de la description suivante qui est faite à titre illustratif et non limitatif et en regard des dessins, dans lesquels :

    – la figure 1 représente un schéma de principe du système de télécommunication conforme à l'invention,

    – la figure 2a représente un schéma de réalisation des moyens de télécommande placés dans le combiné,

– la figure 2b représente un schéma de réalisation des moyens de réception placés dans le terminal,

– les figures 3a, 3b, 3c représentent différentes configurations possibles relatives aux modes de transmission choisis,

– la figure 4 illustre le cas d'une télécommande infrarouge.

Comme on va le voir à partir des exemples de réalisation décrits, le combiné téléphonique permet de générer des signaux codés de télécommande à débit binaire rapide- permettant ainsi d'obtenir un grand choix de fonctions télécommandées. A titre d'exemple, on dispose de vingt touches que l'on peut appuyer à cadence rapide.

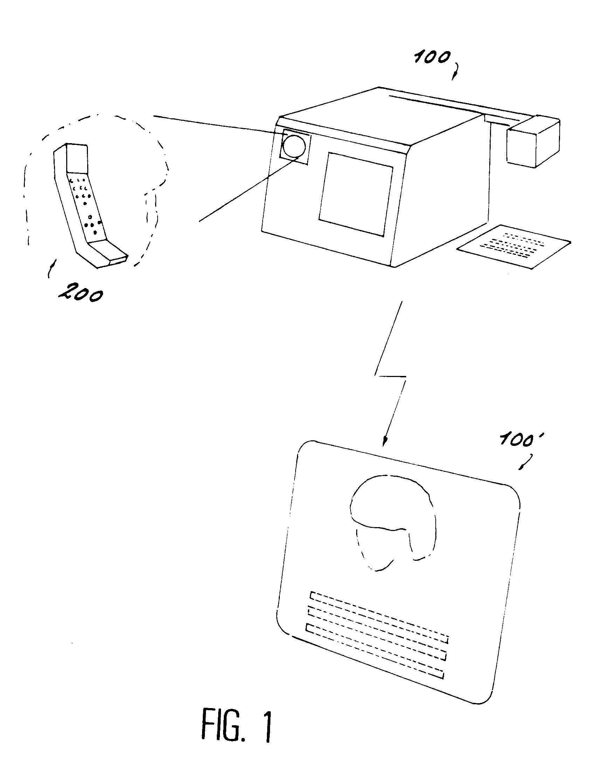

La figure 1 permet d'illustrer un système de télécommunication visuelle et sonore conforme à l'invention.

Ce système s'applique tout particulièrement à la visiophonie.

L'utilisateur du visiophone 100 a à sa disposition un terminal équipé d'une caméra (ou de plusieurs), d'un clavier et d'un combiné téléphonique 200. La caméra permet tout aussi bien d'envoyer l'image d'un utilisateur local ou de plusieurs utilisateurs locaux à un ou plusieurs utilisateur(s) distant(s), que l'image d'un texte ou d'un graphisme ou d'un objet à exposer 100'.

Conformément à l'invention, le combiné est équipé de moyens de télécommande permettant de déplacer à distance un curseur sur l'écran pour désigner l'action à accomplir sur un menu et de "cliquer" sur une zone, comme on peut le faire avec une souris.

Les moyens de télécommande permettent par exemple de réaliser :

– la commande de zoom ou toute action sur l'optique ou la caméra telle que la température de couleur, la balance manuelle des blancs, le secret image,

– la commande de codage pour contrôler le positionnement de l'utilisateur devant la caméra ou bien pour télécommander la caméra distante et le codage du correspondant,

– la commande d'action sur la gestion des appels, telle que le transfert sur un poste différent et tous les services offerts par le réseau numérisé,

– la commande du son, par exemple mise en service de l'écouteur placé sur le terminal pour fonctionner en "mains libres" ou coupure du son.

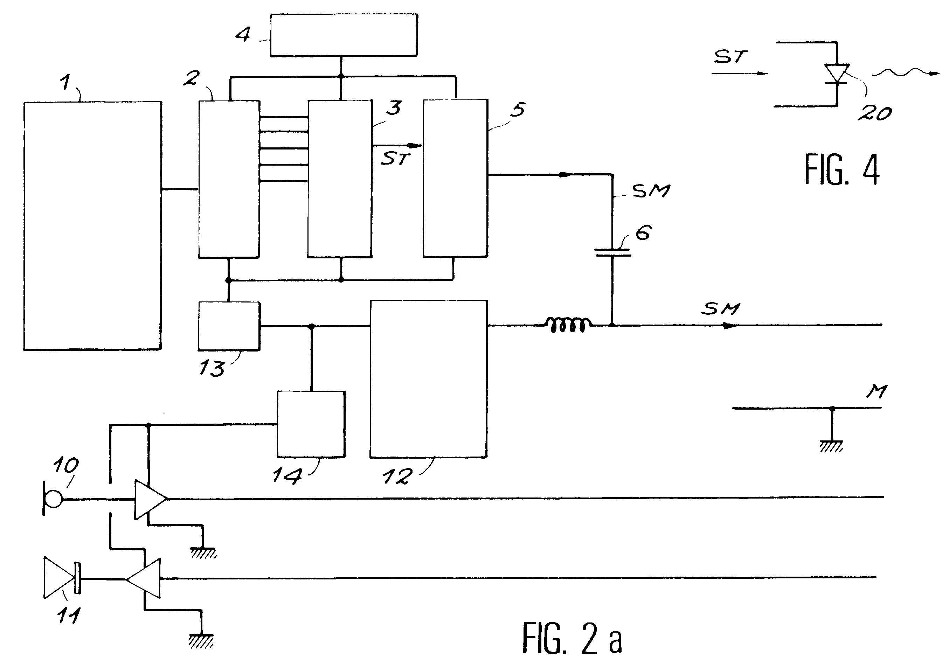

La figure 2a représente un schéma de réalisation conforme à un mode de réalisation donné à titre d'exemple.

Il s'agit du mode de réalisation suivant lequel le signal de télécommande est tansmis sur un fil d'alimentation des amplificateurs des transducteurs électroacoustiques (microphone et écouteur).

Une matrice clavier 1 classique relie les touches du combiné (ou la boule) à un encodeur 2 permettant d'obtenir un signal logique sous la forme d'un mot binaire parallèle, fonction des touches sur lesquelles l'utilisateur a appuyé.

L'encodeur 2 est relié à un sérialisateur qui transforme le mot binaire parallèle en mot série, représenté par la référence ST.

Une horloge 4 est prévue pour piloter le sérialisateur 3.

Le signal logique ST est appliqué à l'entrée du modulateur 5 qui délivre un signal sous forme d'une salve modulée à une fréquence f (choisie à titre d'exemple égale à 100 KHz). A titre d'exemple également, le débit du modulateur est de 50 bits/s.

La salve modulée SM charge un condensateur de découplage 6 qui se décharge sur la ligne d'alimentation +V.

Ce schéma de réalisation comporte en outre de façon préférentielle une self inductance de choc 7 permettant de protéger le microphone 10 contre tout risque d'application du signal modulé qui endommagerait la qualité de la prise de son.

Pour cela, la self 7 est placée sur le trajet de l'alimentation du microphone 10.

Un régulateur de tension 12 est disposé également sur ce trajet, entre la self 7 et le microphone 10.

On peut prévoir également des convertisseurs de tension et des filtres tels que représentés sur ce schéma, pour obtenir les tensions d'alimentation désirées pour les circuits 2, 3 et 5.

On a représenté sur ce schéma un convertisseur 13 pour obtenir la tension V3 à partir de la tension V2 délivrée par le régulateur 12.

On a également représenté un convertisseur 14 pour obtenir la tension V5 à partir de la tension V2.

La figure 4 illustre le mode de réalisation correspondant au cas où le signal de télécommande est un signal infrarouge. Dans ce cas, le signal ST permet de moduler le signal émis par une diode 20 infrarouge.

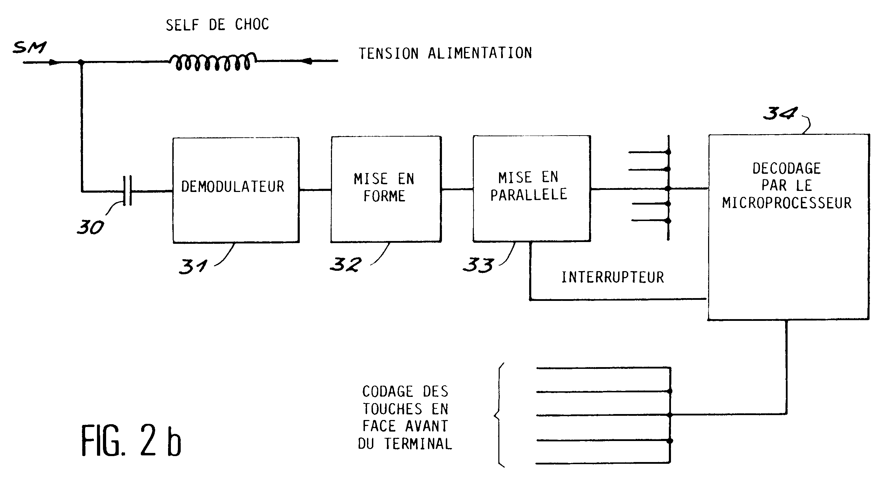

La figure 2b illustre un mode de réalisation des moyens de réception placés dans le terminal.

Ces moyens de réception comportent un condensateur 30 qui se charge et se décharge à partir du signal reçu SM.

Un modulateur 31 reçoit le signal SM et le démodule. Le signal démodulé est appliqué à un circuit de mise en forme 32. Le signal de sortie du circuit 32 est appliqué à un circuit de mise en parallèle 33. Les mots obtenus aux sorties du circuit 33 sont appliqués aux entrées d'un circuit de décodage ou d'un microprocesseur 34 du terminal qui les interprète.

Ce microprocesseur reçoit également le décodage des touches en face avant du terminal. Il reçoit également un signal d'interruption du circuit 33.

Dans les exemples qui suivent, le terminal est relié au combiné par un cordon.

Par ailleurs, le cordon comporte un fil d'alimentation pour l'alimentation des amplificateurs des transducteurs (microphone et écouteur) qui nécessitent une alimentation.

Ces éléments sont choisis de manière à obéir aux contraintes de qualité imposées par la référence CCITT (livres bleus) P35, "Postes téléphoniques à combiné" et CCITT G722 "Codage audiofréquence à 7 kHz à un débit inférieur ou égal à 64 K.bit/s".

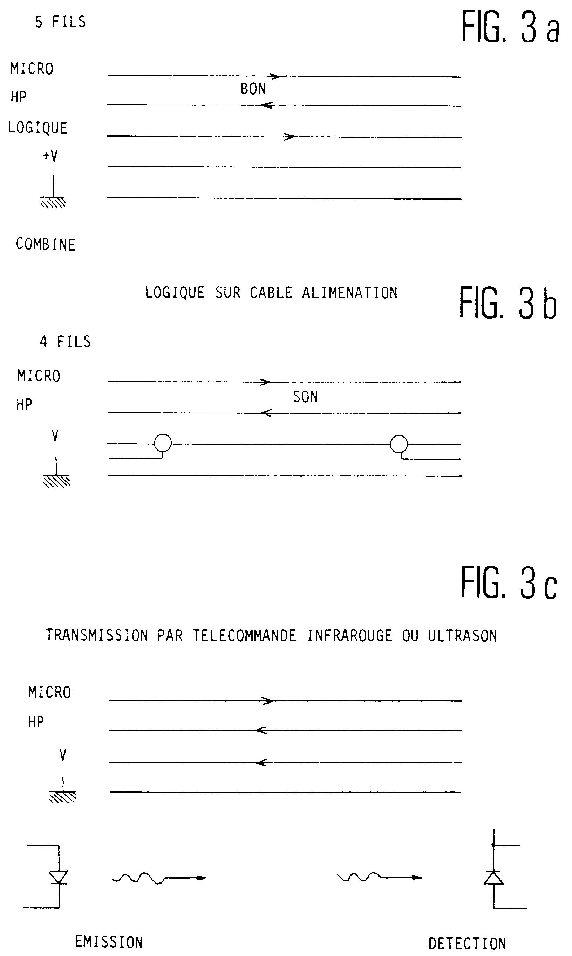

Les figures 3a, 3b et 3c illustrent les différents modes de transmission possibles des signaux codés de télécommande.

La figure 3a représente le cas de la transmission à partir du cordon reliant le combiné au terminal, le cordon comportant un fil supplémentaire pour la logique, c'est-à-dire pour le signal codé de télécommande.

Le cordon représenté comporte cinq fils.

Sur la figure 3b, le cordon comporte quatre fils. La logique (signaux codés) est transmise sur le fil d'alimentation +V.

Sur la figure 3c, le cordon comporte quatre fils, la transmission est réalisée par infrarouge.

## Revendications

1. Système de télécommunication visuelle et sonore comportant un terminal, une caméra et un combiné téléphonique comprenant un écouteur et un microphone, caractérisé en ce que le combiné comprend en outre des moyens de télécommande du terminal et de la caméra à partir du terminal, qui comportent des moyens d'action permettant à l'utilisateur du combiné d'obtenir des déplacements en x,y à distance d'un curseur sur l'écran du terminal et de "cliquer" sur une zone, et qui émettent des signaux codés de télécommande, le terminal comprenant des moyens de réception et de décodage de ces signaux.

2. Système de télécommunication, selon la revendication 1, caractérisé en ce que les moyens de télécommande comportent des moyens de génération de signaux électriques de télécommande sous la forme de salves modulées.

3. Système de télécommunication selon la revendication 1, caractérisé en ce que les moyens de commande comportent des moyens de génération de signaux infrarouges modulés de télécommande.

4. Système de télécommunication selon la revendication 1, caractérisé en ce que les moyens de télécommande comportent des moyens de génération de signaux ultrasons modulés de télécommande.

5. Système de télécommunication selon les revendications 1 et 2, caractérisé en ce que le combiné est relié au terminal par un cordon et en ce que le cordon comporte au moins un fil supplémentaire permettant de transmettre le signal de télécommande.

6. Système de télécommunication selon les revendications 1 et 2, caractérisé en ce que le combiné est relié au terminal par un cordon qui comprend un fil d'alimentation du microphone et de l'écouteur et en ce que le signal de télécommande est transmis par ce fil d'alimentation.

7. Système de télécommunication selon la revendication 1, caractérisé en ce que les moyens d'action sont constitués soit par des touches d'un clavier placé sur le combiné actif, qu'il soit porté à l'oreille ou qu'il soit dans toute autre position de l'espace.

8. Système de télécommunication selon la revendication 1, caractérisé en ce que les moyens d'action sont constitués par une boule, un "joystick" etc...

9. Système de télécommunication selon la revendication 7, caractérisé en ce que le clavier du combiné comporte, outre les touches permettant d'obtenir un déplacement du curseur sur l'écran et la fonction "cliquer" une zone, des touches de numérotation.

10. Système de télécommunication selon l'une quelconque des revendications 1, 2, 5 à 7 et 10, caractérisé en ce que les moyens de génération d'un signal électrique de télécommande comportent un encodeur 2 relié aux sorties de la matrice clavier 1, un sérialisateur 3 relié aux sorties de l'encodeur, un modulateur 5 relié à la sortie du sérialisateur et délivrant une salve modulée sur le cordon du combiné.

11. Système de télécommunication selon l'une quelconque des revendications 1, 3, 5 à 7 et 10, caractérisé en ce que les moyens de génération d'un signal infrarouge comportent un encodeur 2 relié aux sorties de la matrice clavier 1, un sérialisateur 3 relié aux sorties de l'encodeur et au moins un émetteur infrarouge piloté par le signal de sortie du sérialisateur.

12. Système de télécommunication selon l'une quelconque des revendications 1, 4, 5 à 7 et 9, caractérisé en ce que les moyens de génération d'un signal ultrason comportent un encodeur 2 relié aux sorties de la matrice clavier 1, un sérialisateur 3 relié aux sorties de l'encodeur et un émetteur ultrason piloté par le signal de sortie du sérialisateur.

100

200

100'

FIG. 1

FIG. 4

FIG. 2 a

EP 0 506 544 A1

SELF DE CHOC

SM

TENSION ALIMENTATION

30

| DEMODULATEUR | MISE EN FORME | MISE EN PARALLELE |

31        32        33

34

DECODAGE PAR LE MICROPROCESSEUR

INTERRUPTEUR

CODAGE DES TOUCHES EN FACE AVANT DU TERMINAL

FIG. 2 b

EP 0 506 544 A1

# FIG. 3 a

5 FILS

MICRO

HP    BON

LOGIQUE

+V

COMBINE

# FIG. 3 b

LOGIQUE SUR CABLE ALIMENATION

4 FILS

MICRO

HP    SON

V

# FIG. 3 c

TRANSMISSION PAR TELECOMMANDE INFRAROUGE OU ULTRASON

MICRO

HP

V

EMISSION           DETECTION

EP 0 506 544 A1

**Office européen des brevets**

**RAPPORT DE RECHERCHE EUROPEENNE**

Numero de la demande

EP 92 40 0791

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 382 601  (ETAT FRANCAIS) * Abrégé; revendications 1,18; figures 1-8; colonne 4, lignes 49-57; colonne 7, lignes 11-58; colonne 14, lignes 14-50 * | 1,2,7,9 ,10 | H 04 N   7/14 H 04 N   5/232 |
| Y | PATENT ABSTRACTS OF JAPAN, vol. 13, no. 539 (E-853), 30 novembre 1989; & JP-A-1 221 086 (MITSUBISHI ELECTRIC CORP.) 04-09-1989 * Abrégé * | 1,2,7,9 ,10 | |
| A | EP-A-0 353 143  (RETAT FRANCAIS) * Le document en entier * | 1,2,5,6 ,10 | |
| A | GB-A-2 228 595  (PAUL BERNARD) * Le document en entier * | 1-3,9-12 | |
| A | FR-A-2 563 674  (HORLOGERIE PHOTOGRAPHIQUE FRANCAISE) * Abrégé; revendications 1,2; figures 1,2 * | 1,2,5,6 | |
| A | US-A-4 313 227  (EDER) * Abrégé; figures 1-7 * | 1-3,8, 10-12 | **DOMAINES TECHNIQUES RECHERCHES (Int. Cl.5)** H 04 N |
| A | PATENT ABSTRACTS OF JAPAN, vol. 13, no. 433 (E-824), 27 septembre 1989; & JP-A-01 160 286 (MITSUBISHI ELECTRIC CORP.) 23-06-1989 * Abrégé * | 1,3,4, 10-12 | |
| A | PATENT ABSTRACTS OF JAPAN, vol. 14, no. 301 (P-1069), 28 juin 1990; & JP-A-02 096 212 (NEC CORP.) 09-04-1990 * Abrégé * -/- | 8 | |

Le présent rapport a été établi pour toutes les revendications

| Lieu de la recherche | Date d'achèvement de la recherche | Examinateur |
|---|---|---|
| LA HAYE | 21-05-1992 | KASSOW H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

9

**Office européen**
**des brevets**

**RAPPORT DE RECHERCHE EUROPEENNE**

Numero de la demande

EP   92 40 0791

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 12, no. 308 (E-647), 22 août 1988; & JP-A-63 074 294 (MATSUSHITA ELECTRIC IND. CO., LTD) 04-04-1988 * Abrégé * --- | 1,3 | |
| A | EP-A-0 413 838 (DEUTSCHE ITT INDUSTRIES GmbH) * Abrégé; figures 1,2,5; colonne 8, ligne 8 - colonne 9, ligne 8 * ----- | 1,3,11, 12 | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 21-05-1992 | KASSOW H. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
.......................................................................................
& : membre de la même famille, document correspondant

EPO FORM 1503 03.82 (P0402)